# EUROPÄISCHE PATENTSCHRIFT

(11) **EP 3 710 199 B1**
(45) Veröffentlichungstag und Bekanntmachung des Hinweises auf die Patenterteilung: **13.10.2021**
(21) Anmeldenummer: 18799485.0
(22) Anmeldetag: 02.11.2018
(51) Int. Cl.: B23Q 17/24, G01B 11/02, G01B 11/00, B23Q 17/22

(54) **VORRICHTUNG UND VERFAHREN ZUM BESTIMMEN EINER POSITION UND/ODER AUSRICHTUNG EINES WERKSTÜCKS**
DEVICE AND METHOD FOR DETERMINING A POSITION AND/OR ORIENTATION OF A WORKPIECE
DISPOSITIF ET PROCÉDÉ POUR DÉTERMINER LA POSITION ET/OU L'ORIENTATION D'UNE PIÈCE

(30) Priorität: 14.11.2017 DE 102017126786
(43) Veröffentlichungstag der Anmeldung: 23.09.2020
(73) Patentinhaber: Fraunhofer-Gesellschaft zur Förderung der angewandten Forschung e.V., 80686 München (DE)
(72) Erfinder: BUHR, Malte, 22926 Ahrensburg (DE); MÖLLER, Mauritz, 22303 Hamburg (DE); EMMELMANN, Claus, 21220 Seevetal-Horst (DE)
(74) Vertreter: Koplin, Moritz
(86) Internationale Anmeldenummer: PCT/EP2018/080035
(87) Internationale Veröffentlichungsnummer: WO 2019/096595

(56) Entgegenhaltungen:
- DE-A1-102007 031 835
- DE-A1-102011 104 550
- FR-A1- 2 925 376
- US-A1- 2009 020 688

## Beschreibung

Die vorliegende Erfindung bezieht sich auf eine Vorrichtung und ein Verfahren zum Bestimmen einer Position und/oder Ausrichtung eines Werkstücks.

### HINTERGRUND

Bei der industriellen Bearbeitung von Werkstücken werden oftmals computergesteuerte Vorrichtungen verwendet, die eingerichtet sind, einen oder mehrere aufeinanderfolgende Arbeitsschritte auszuführen, wobei das Werkstück und eine das Werkstück bearbeitende Bearbeitungseinheit vor oder während der Bearbeitung relativ zueinander bewegt werden müssen. Dabei kann es zur Erhöhung der Bearbeitungseffizienz vorteilhaft sein, die Position und/oder Ausrichtung des Werkstücks mittels eines Sensors zu erfassen und die Relativbewegung zwischen Werkstück und Bearbeitungseinheit auf Basis der erfassten Sensordaten zu regeln.

Zur Erfassung der Position und/oder der Ausrichtung eines Werkstücks ist es bekannt, die Oberfläche des Werkstücks mit elektromagnetischer Strahlung strukturiert zu bestrahlen und durch Erfassen der an der Oberfläche reflektierten elektromagnetischen Strahlung mittels Triangulation die Position und/oder die Ausrichtung des Werkstücks zu berechnen. Zum strukturierten Bestrahlen der Oberfläche des Werkstücks mit elektromagnetischer Strahlung wird oftmals eine Laserlichtquelle eingesetzt, die eingerichtet ist, im Betrieb eine oder mehrere Lichtlinien auf der Oberfläche des Werkstücks zu erzeugen. Die Lichtlinien können dann mittels eines optischen Sensors erfasst und durch eine dem Sensor nachgeschaltete Verarbeitungseinheit auf Basis eines Bildverarbeitungsalgorithmus ausgewertet werden.

Der Gegenstand gemäß dem Oberbegriff von Anspruch 1 und die Lehre gemäß dem Oberbegriff von Anspruch 9 sind aus den Druckschriften FR 2 925 376 A1 und US 2009/020688A1 bekannt.

Weiterer relevanter Stand der Technik kann der Druckschrift DE 10 2007 031835 A1 entnommen werden.

### ZUSAMMENFASSUNG

Die Erfindung bereichert diesbezüglich den Stand der Technik, als erfindungsgemäße Vorrichtungen und Verfahren anstatt einer einzelnen Strahlungsquelle ein Strahlungsquellenpaar bzw. einen Strahlteiler umfassen/einsetzen, was es erleichtert, elektromagnetische Strahlung aus unterschiedlichen Richtungen auf sich (teilweise) überlappende (insbesondere linienförmige) Bereiche der Oberfläche abzustrahlen, so dass durch die Geometrie des Werkstücks bedingte Abschattungseffekte reduziert bzw. vermieden werden können.

Eine erfindungsgemäße Vorrichtung zum Bestimmen einer Position und/oder Ausrichtung eines Werkstücks relativ zu einer Bearbeitungseinheit umfasst eine in einer definierten Lagebeziehung zur Bearbeitungseinheit oder in einer definierten Lagebeziehung zu einer Aufnahme, die zum Aufnehmen der Bearbeitungseinheit vorgesehen ist, angeordnete erste Strahlungsquelle und eine von der ersten Strahlungsquelle in einer Raumrichtung beabstandet angeordnete zweite Strahlungsquelle, oder eine Strahlteilereinheit. Die Strahlungsquellen bzw. die Strahlteilereinheit sind eingerichtet, während des Betriebs der Vorrichtung elektromagnetische Strahlung auf zwei unmittelbar aneinander angrenzende oder sich zumindest teilweise überlappende Raumkurven zu fokussieren oder die elektromagnetische Strahlung entlang zweier unmittelbar aneinander angrenzender oder sich schneidender Flächen abzustrahlen.

Eine erfindungsgemäße Vorrichtung umfasst ferner eine gemäß einer definierten Lagebeziehung zu den Strahlungsquellen bzw. der Strahlteilereinheit angeordnete Sensoreinheit, welche eingerichtet ist, während des Betriebs der Vorrichtung von der Strahlungsquelle bzw. den Strahlungsquellen abgestrahlte und an einer Oberfläche des Werkstücks reflektierte elektromagnetische Strahlung und/oder von der Oberfläche des Werkstücks abgestrahlte elektromagnetische Strahlung zu erfassen, und eine Verarbeitungseinheit, welche eingerichtet ist, die Position und/oder Ausrichtung des Werkstücks relativ zur Bearbeitungseinheit auf Basis der erfassten elektromagnetischen Strahlung zu bestimmen. Die Verarbeitungseinheit ist eingerichtet, ein Fehlersignal auszugeben, wenn ein Abstand zwischen einer ersten Reflexionsspur der elektromagnetischen Strahlung auf einer Oberfläche, besonders vorzugsweise der Oberfläche des Werkstücks, und einer zweiten Reflexionsspur der elektromagnetischen Strahlung auf der Oberfläche außerhalb eines Toleranzbereiches liegt.

Dabei ist unter dem Begriff "Werkstück", wie er in der Beschreibung und den Ansprüchen verwendet wird, insbesondere ein Gegenstand aus einem festen Material zu verstehen, der durch die Bearbeitung verändert werden soll, indem z. B. Material abgetragen, Material in seiner Struktur verändert oder (gleiches oder anderes) Material angefügt wird (wie bspw. Bohren, Fräsen, Schweißen, additives Fertigen, Beschichten, etc.). Ferner ist unter dem Begriff "Bearbeitungseinheit", wie er in der Beschreibung und den Ansprüchen verwendet wird, insbesondere eine Bauteilgruppe zu verstehen, durch welche die Veränderung des Gegenstands bewirkt werden soll, indem z. B. die Bauteilgruppe bzw. Teile der Bauteilgruppe mechanisch auf den Gegenstand einwirken bzw. dem Gegenstand Energie oder Material zuführen.

Des Weiteren ist unter dem Begriff "Strahlungsquelle", wie er in der Beschreibung und den Ansprüchen verwendet wird, insbesondere eine oder mehrere elektromagnetische Strahlung emittierende Dioden oder ein Laser zu verstehen. Zudem ist unter dem Begriff "Strahlteilereinheit", wie er in der Beschreibung und den Ansprüchen verwendet wird, insbesondere eine optische Baugruppe zu verstehen, die einen einzelnen Lichtstrahl in zwei Teilstrahlen trennt (bspw. mittels eines teildurchlässigen Spiegels). Ferner kann die Strahlteilereinheit ein oder mehrere optische Bauelemente zum Ablenken eines oder beider Teilstrahlen aufweisen.

Ferner ist unter dem Begriff "Sensoreinheit", wie er in der Beschreibung und den Ansprüchen verwendet wird, insbesondere eine Bauteilgruppe zu verstehen, die ein oder mehrere ladungsgekoppelte Bauteile (CCD-Sensoren) oder ein oder mehrere CMOS-Bauteile (CMOS-Sensoren) aufweist. Die Bauteilgruppe kann zudem Einrichtungen zum Erfassen der Temperatur und/oder Verformung (bspw. einen Dehnungsmessstreifen) der Werkstückoberfläche umfassen, um neben der reflektierten elektromagnetischen Strahlung auch die (durch die elektromagnetische Strahlung hervorgerufene) Erwärmung/Ausdehnung des Werkstücks messen und bei der Bestimmung der Position und/oder Ausrichtung des Werkstücks relativ zur Bearbeitungseinheit berücksichtigen/verwenden zu können.

Vorzugsweise liegen die Raumkurven in einer Ebene bzw. sind die Flächen eben.

Vorzugsweise sind die Raumkurven gerade.

Bspw. kann die erste Strahlungsquelle und/oder die zweite Strahlungsquelle einen Laser oder eine LED-Matrix und im Strahlengang angeordnete optische Bauteile aufweisen, die die elektromagnetische Strahlung auf eine Linie fokussieren (bspw. einen Linienlaser).

Vorzugsweise umfasst die Sensoreinheit eine Spiegelanordnung, die sich entlang der zwei unmittelbar aneinander angrenzenden oder sich zumindest teilweise überlappenden Raumkurven bzw. entlang der zwei sich schneidenden Flächen erstreckt und ein Erfassen der elektromagnetischen Strahlung aus unterschiedlichen Perspektiven erlaubt.

Dies erleichtert es, in unterschiedliche Raumrichtungen reflektierte/abgestrahlte elektromagnetische Strahlung mit einem einzelnen Sensor der Sensoreinheit zu erfassen, und durch die Geometrie des Werkstücks bedingte und aus der Position des Sensors resultierende Abschattungseffekte zu reduzieren bzw. zu vermeiden.

Vorzugsweise ist ein Sensor der Sensoreinheit auf einer Mittelhalbierenden einer Verbindungslinie zwischen der ersten Strahlungsquelle und der zweiten Strahlungsquelle angeordnet und/oder erfüllt die Sensoreinheit die Scheimpflug-Bedingung.

Vorzugsweise weist die Vorrichtung eine Messeinheit, umfassend die erste Strahlungsquelle, die zweite Strahlungsquelle bzw. die Strahlteilereinheit und die Sensoreinheit auf, wobei die Messeinheit in der Vorrichtung um eine Rotationsachse drehbar gelagert ist.

Dies vereinfacht das Ausrichten der Messeinheit. Bspw. kann die Messeinheit um die Bearbeitungseinheit oder die Aufnahme schwenkbar sein, wodurch im Betrieb die Notwendigkeit einer Umpositionierung der Bearbeitungseinheit zum Ausrichten der Messeinheit vermieden werden kann.

Vorzugsweise sind die erste Strahlungsquelle, die zweite Strahlungsquelle bzw. die Strahlteilereinheit und die Sensoreinheit in einer Messeinheit umfasst und die Vorrichtung weist eine Vielzahl solcher Messeinheiten auf.

Durch mehrere Messeinheiten kann im Betrieb die Notwendigkeit einer Umpositionierung der Bearbeitungseinheit, wie sie bspw. bei Vorhandensein einer einzelnen Messeinheit, welche in fixer Position und Ausrichtung relativ zur Bearbeitungseinheit angeordnet ist, zum Ausrichten der Messeinheit notwendig sein kann, vermieden werden.

Vorzugsweise schneiden sich Strahlengänge der Messeinheiten.

Dadurch kann, bspw. durch um die Bearbeitungseinheit angeordnete Messeinheiten, ein die Bearbeitungseinheit teilweise oder vollständig umschließender Strahlenvorhang erzeugt werden, der in Hinblick auf die Positionierung der Bearbeitungseinheit zum Ausrichten einer Messeinheit eine weitgehend oder vollständig richtungsunabhängige Bearbeitung des Werkstücks ermöglicht.

Ein erfindungsgemäßes Verfahren zum Bestimmen einer Position und/oder Ausrichtung eines Werkstücks umfasst ein Erzeugen eines oder mehrerer Reflexionslinien-Paare, wobei jedes Reflexionslinien-Paar zwei unmittelbar aneinander angrenzende oder sich zumindest teilweise überlappende und/oder parallele Reflexionslinien, besonders vorzugsweise Lichtlinien, umfasst, die durch aus unterschiedlichen Richtungen auf die Oberfläche abgestrahlte elektromagnetische Strahlung erzeugt werden. Ein erfindungsgemäßes Verfahren umfasst ferner ein Erfassen der Reflexionslinien und ein Bestimmen der Position und/oder Ausrichtung des Werkstücks mittels Triangulation auf Basis der Reflexionslinien. Ein erfindungsgemäßes Verfahren umfasst ferner ein Bestimmen eines Abstands der Reflexionslinien eines Reflexionslinien-Paares und ein Ausgeben eines Fehlersignals, wenn der Abstand außerhalb eines Toleranzbereiches liegt.

Vorzugsweise schneiden sich Reflexionslinien unterschiedlicher Reflexionslinien-Paare auf der Oberfläche des Werkstücks und/oder schließen gleich große Winkel ein.

Ferner versteht es sich, dass alle Merkmale (bevorzugter Ausführungsformen) erfindungsgemäßer Vorrichtungen auch Merkmale (bevorzugter Ausführungsformen) erfindungsgemäßer Verfahren sein können, welche sich auf die Verwendung erfindungsgemäßer Vorrichtungen beziehen, und umgekehrt.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1a eine schematische Vorderansicht einer beispielhaften Ausgestaltung einer erfindungsgemäßen Vorrichtung zeigt;
Fig. 113 eine schematische Vorderansicht einer Abwandlung der in Fig. 1a gezeigten beispielhaften Ausgestaltung zeigt;

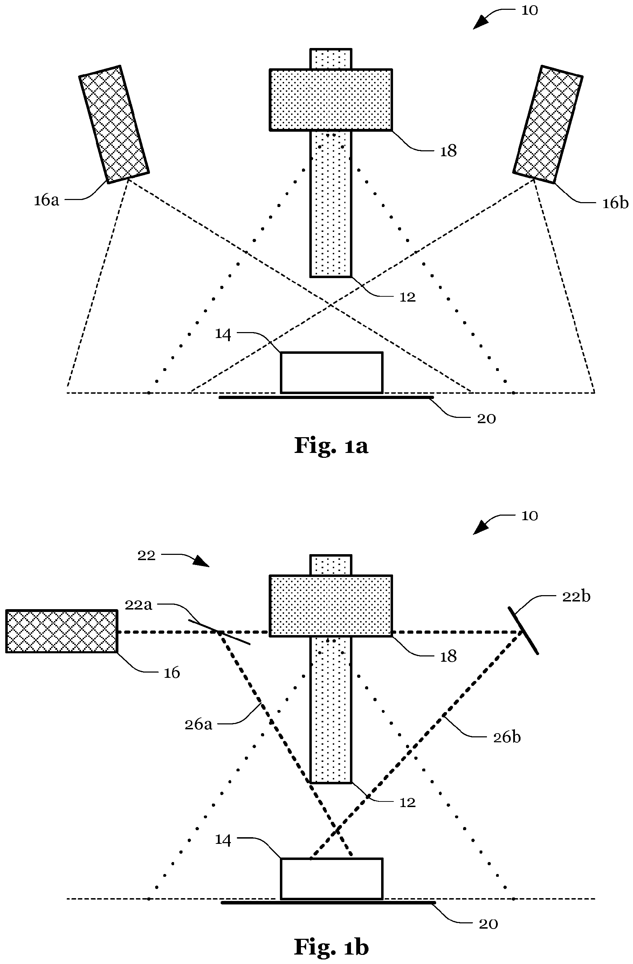

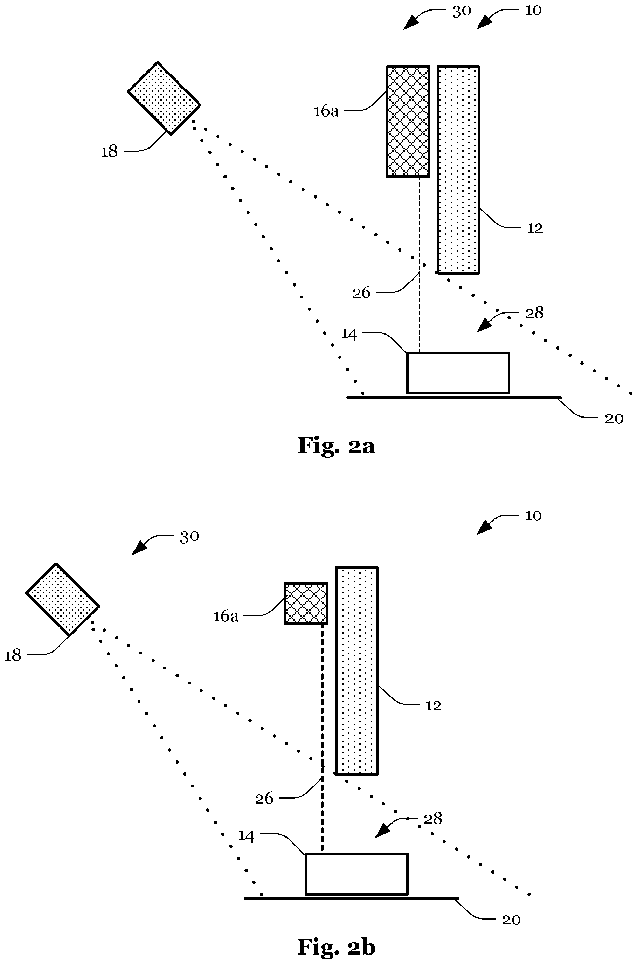

Fig. 2a eine schematische Seitenansicht der in Fig. 1a gezeigten beispielhaften Ausgestaltung zeigt;
Fig. 2b eine schematische Seitenansicht der in Fig. 1b gezeigten Abwandlung zeigt;

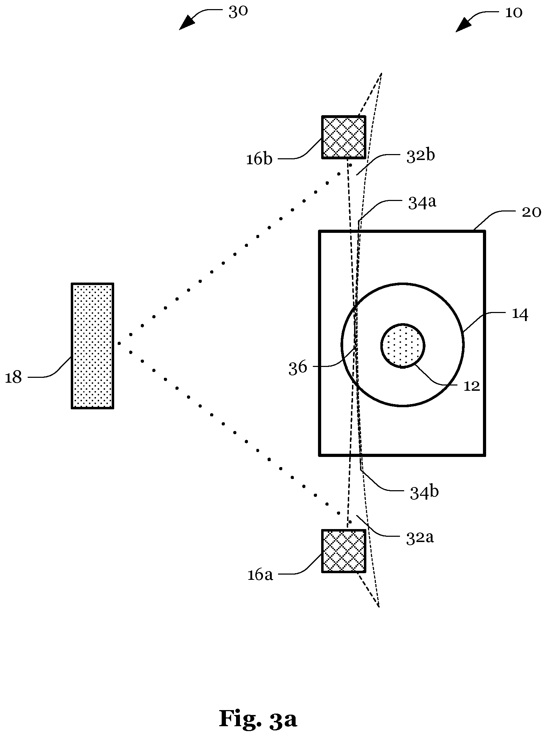

Fig. 3a eine schematische Draufsicht auf die in Fig. 1a gezeigte beispielhafte Ausgestaltung zeigt, gemäß einer ersten Ausführungsform;

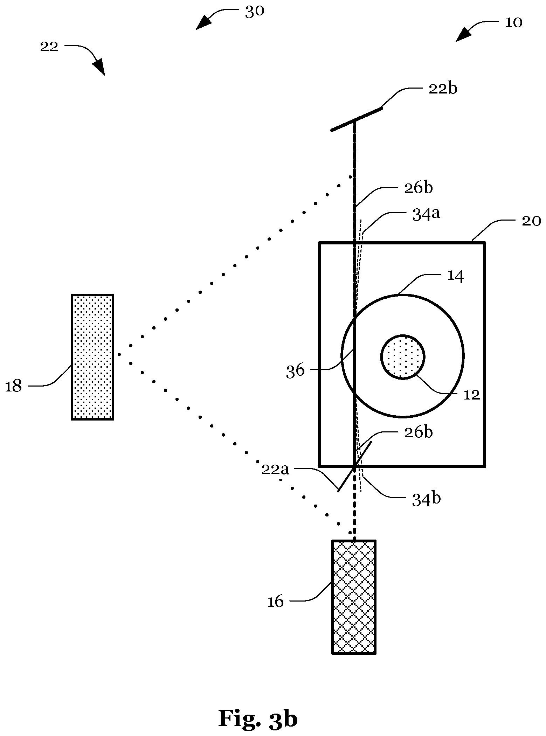

Fig. 3b eine schematische Draufsicht auf die in Fig. 1b gezeigte Abwandlung zeigt;

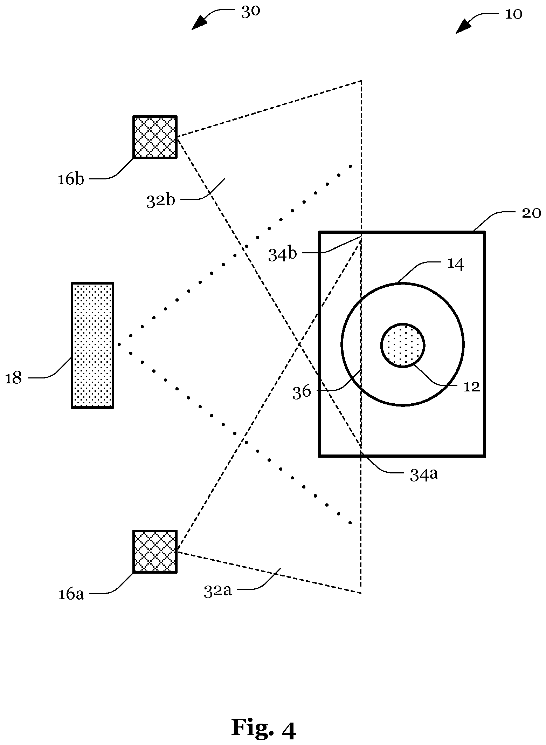

Fig. 4 eine schematische Draufsicht auf die in Fig. 1a gezeigte beispielhafte Ausgestaltung zeigt, gemäß einer zweiten Ausführungsform;

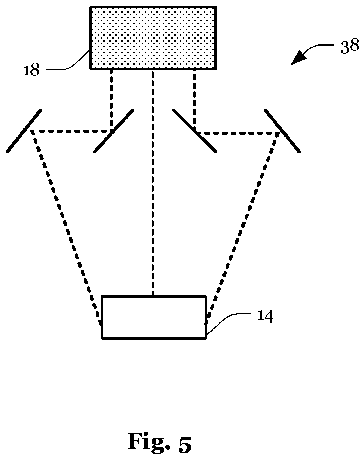

Fig. 5 eine Abwandlung der in Fig. 1a bis 4 gezeigten Ausführungsformen illustriert;

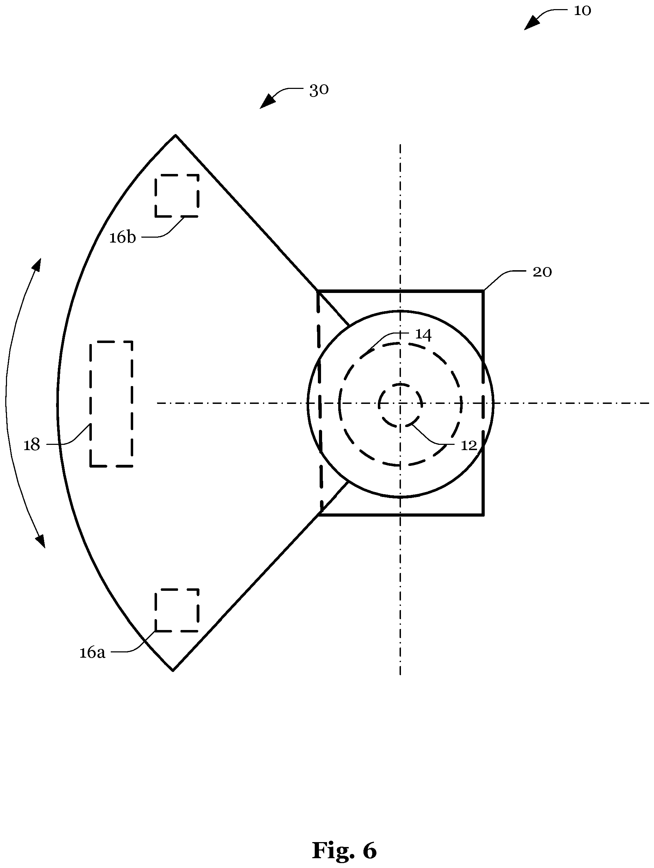

Fig. 6 zusätzliche (optionale) Elemente der in Fig. 1a bis 5 gezeigten Ausführungsformen illustriert;

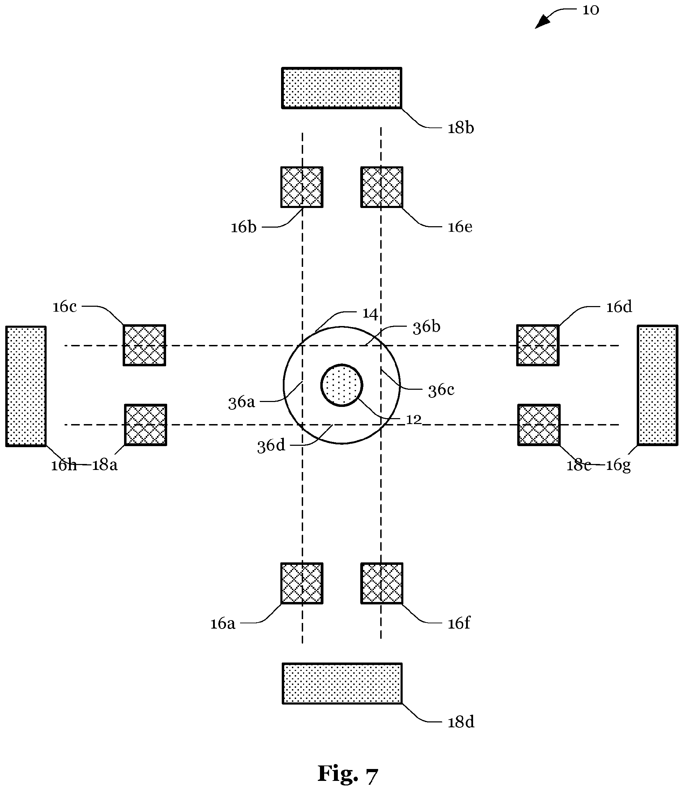

Fig. 7 weitere (optionale) Elemente der in Fig. 1a bis 6 gezeigten Ausführungsformen illustriert;

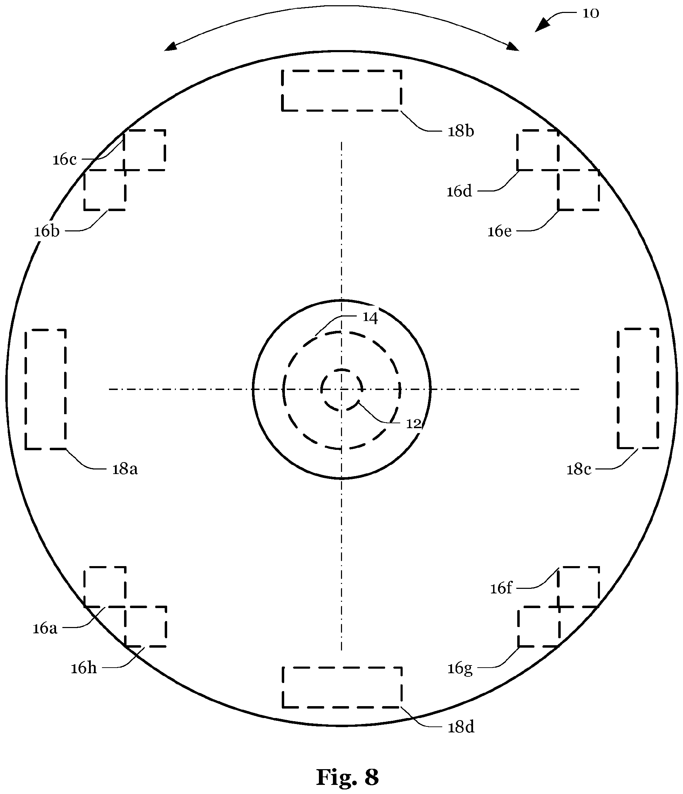

Fig. 8 weitere (optionale) Elemente der in Fig. 1a bis 7 gezeigten Ausführungsformen illustriert; und

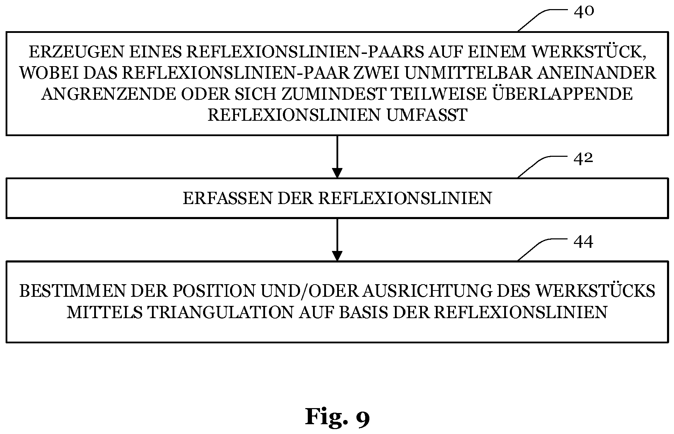

Fig. 9 ein Flussdiagramm eines Verfahrens zum Bestimmen einer Position und/oder Ausrichtung eines Werkstücks zeigt.

Dabei sind in den Zeichnungen gleiche und funktional ähnliche Elemente durch gleiche Bezugszeichen gekennzeichnet. Jedoch versteht es sich, dass nicht notwendigerweise alle Elemente in allen Zeichnungen gezeigt sind und dass die gezeigten Elemente nicht notwendigerweise maßstabsgetreu dargestellt sind.

### DETAILLIERTE BESCHREIBUNG

Fig. 1 zeigt eine schematische Vorderansicht einer Vorrichtung 10 zum Bestimmen der Relativposition und -ausrichtung zwischen einer Bearbeitungseinheit 12 (Prozesskopf) und einem durch die Bearbeitungseinheit 12 zu bearbeitenden Werkstück 14. Die Vorrichtung 10 umfasst eine erste Strahlungsquelle 16a und eine zweite Strahlungsquelle 16b zum strukturierten Beleuchten des Werkstücks 14. Dabei wird das auf das Werkstück 14 projizierte Strahlungsmuster (bspw. eine Linie oder ein Gitter) aus zwei sich zumindest teilweise überlappenden und je nach Werkstückgeometrie gegenseitig ergänzenden Teilmustern zusammengesetzt, die durch Einfall elektromagnetischer Strahlung aus unterschiedlichen Raumrichtungen erzeugt werden. Die Raumrichtungen aus denen die elektromagnetischen Strahlen auf das Werkstück 14 einfallen sind dabei in dem in Fig. 1a gezeigten Beispiel in zwei nicht überlappende (Raumrichtungs-) Bereiche aufgeteilt, die aus den unterschiedlichen Positionen der Strahlungsquellen 16a, 16b resultieren.

Zum Erfassen der strukturierten Beleuchtung umfasst die Vorrichtung 10 eine Sensoreinheit 18 mit einem Sensor (bspw. ein CCD- oder CMOS-Sensor) zum Erfassen elektromagnetischer Strahlung und einer vorgeschalteten Optik, die die WerkstückOberfläche auf die Sensoroberfläche abbildet. Die vorgeschaltete Optik ist dabei vorzugsweise so ausgerichtet, dass die Scheimpflug-Bedingung (Bildebene, Projektionsebene und Objektivebene schneiden sich in einer Geraden) hinsichtlich der strukturierten Beleuchtung (zumindest näherungsweise) erfüllt ist. Ist die Werkstückgeometrie vorab nicht bekannt oder wird die Vorrichtung 10 bei der Bearbeitung von Werkstücken 14 unterschiedlicher Geometrie verwendet, kann die Sensoreinheit 18 so angeordnet bzw. ausgestaltet sein, dass die Scheimpflug-Bedingung in Hinblick auf die (Oberfläche der) Werkstückauflage 20 (als Projektionsebene) erfüllt ist, oder die Sensoreinheit 18 bzw. die vorgeschaltete Optik um eine Achse parallel zur Werkstückauflage 20 drehbar sind, um die Vorrichtung 10 an unterschiedliche Werkstückgeometrien anpassen zu können.

Fig. 1b zeigt eine Abwandlung der in Fig. 1a gezeigte Vorrichtung 10, bei der anstatt zweier Strahlungsquellen 16a, 16b, eine einzelne Strahlungsquelle 16 vorgesehen ist, wobei die von der Strahlungsquelle 16 abgestrahlte elektromagnetische Strahlung mittels einer Strahlteilereinheit 22 entlang unterschiedlicher Strahlengänge 26a, 26b (wobei in Fig. 1b der Übersichtlichkeit halber nur ein einzelner Strahl gezeigt ist) gelenkt wird. Die Strahlteilereinheit 22 kann bspw., wie in Fig. 1b gezeigt einen teil- (oder halb-) durchlässigen Spiegel 22a und einen weiteren Spiegel 22b aufweisen, die die von der Strahlungsquelle 16 abgestrahlte elektromagnetische Strahlung teilen und aus unterschiedlichen Raumrichtungen (die im Mittel den Richtungen der auf die Oberfläche des Werkstücks 14 treffenden gestrichelten Linien entsprechen) auf die Oberfläche des Werkstücks 14 lenken.

Fig. 2a zeigt eine weitere Ansicht der in Fig. 1a gezeigten Vorrichtung 10. Dabei ist zu erkennen, dass die Strahlungsquellen 16a, 16b und die Sensoreinheit 18 auf einer Seite (neben) der Bearbeitungseinheit 12 angeordnet und die Strahlungsquellen 16a, 16b (wie auch in Fig. 1a gezeigt) so ausgerichtet sind, dass der Strahlengang 26 lotrecht auf die Oberfläche des Werkstücks 14 bzw. der Werkstückauflage 20 fällt. Jedoch können die Strahlungsquellen 16a, 16b (wie bspw. in Fig. 4, Fig. 6 und Fig. 8 illustriert) auch zu einem Arbeitsbereich 28 (bspw. einem zu bearbeitenden Werkstückabschnitt/-bereich bzw. einer Prozessstelle) hingeneigt sein (d. h. im Mittel nicht lotrecht zur Werkstückauflage 20 ausgerichtet sein), wodurch ein Abstand zwischen der strukturieren Beleuchtung und dem Arbeitsbereich 28 möglicherweise (weiter) reduziert werden kann.

Um eine Verlagerung des Arbeitsbereichs 28 bei einer Relativbewegung zwischen der Bearbeitungseinheit 12 und dem Werkstück 14 zu kompensieren, können die Strahlungsquellen 16a, 16b und die Sensoreinheit 18 als Messeinheit 30 ausgebildet sein, die mit der Bearbeitungseinheit 12 derart verbunden ist, dass sie (bei einer Bewegung der Bearbeitungseinheit 12) mit dieser mitbewegt wird.

Fig. 2b zeigt eine weitere Ansicht der in Fig. 1b gezeigten Vorrichtung 10. Dabei ist, analog zu dem in Fig. 2a Gezeigten zu erkennen, dass die Strahlungsquelle 16, die Strahlteilereinheit 22 und die Sensoreinheit 18 auf einer Seite (neben) der Bearbeitungseinheit 12 angeordnet und (wie auch in Fig. 1b gezeigt) die Strahlteilereinheit 22 so ausgerichtet ist, dass der Strahlengang 26 lotrecht auf die Oberfläche des Werkstücks 14 bzw. der Werkstückauflage 20 fällt (wobei dieser wie im Zusammenhang mit Fig. 2a erläutert alternativ auch zum Arbeitsbereich 28 hingeneigt sein kann).

Um eine Verlagerung des Arbeitsbereichs 28 mit einer Relativbewegung zwischen der Bearbeitungseinheit 12 und dem Werkstück 14 zu kompensieren, können die Strahlungsquelle 16, die Strahlteilereinheit 22 und die Sensoreinheit 18 als Messeinheit 30 ausgebildet sein, die mit der Bearbeitungseinheit 12 derart verbunden ist, dass sie (bei einer Bewegung der Bearbeitungseinheit 12) mit dieser mitbewegt wird.

Fig. 3a zeigt eine weitere Ansicht der in Fig. 1a gezeigten Vorrichtung 10, gemäß einer ersten Ausgestaltung. Wie gezeigt, wird die elektromagnetische Strahlung entlang zweier sich teilweise schneidender Flächen 32a, 32b abgestrahlt, wobei die dadurch gebildete Schnittlinie- oder -fläche die Werkstückoberfläche zumindest teilweise überstreicht. Die elektromagnetische Strahlung ist dabei auf zwei Raumkurven 34a, 34b fokussiert, die (zumindest abschnittsweise) entlang der Oberfläche der Werkstückauflage 20 oder entlang der Oberfläche des Werkstücks 14 verläuft, wodurch auf der Oberfläche des Werkstücks 14 eine durch die Sensoreinheit 18 erfassbare Reflexionsspur 36 in Form einer Reflexionslinie erzeugt wird. Zwischen den Raumkurven 34a, 34b kann ein (unerwünschter) Versatz auftreten, der die Reflexionsspur 36 verbreitert bzw. unscharf werden lässt.

Daher kann eine der Sensoreinheit 18 nachgeschaltete Verarbeitungseinheit (bspw. ein Rechner mit einem Bildverarbeitungsprogramm, nicht gezeigt) eine Bestimmung der Position und/oder Ausrichtung eines Werkstücks 14 relativ zur Bearbeitungseinheit 12 eine Berechnung der Position und/oder Ausrichtung des Werkstücks 14 davon abhängig machen, ob der Versatz einen bestimmten Schwellenwert überschreitet bzw. beim Überschreiten des Schwellenwerts eine Fehlermeldung ausgeben. Ferner kann (vor dem Bestimmen der Position und/oder Ausrichtung des Werkstücks 14 relativ zur Bearbeitungseinheit 12 oder wenn der Schwellenwert überschritten wird) eine Kalibrierungsroutine durchgeführt werden, die darauf gerichtet ist, den Versatz zumindest unter den Schwellenwert zu reduzieren. Im Rahmen der Kalibrierungsroutine kann bspw. ein Ausrichten/Justieren einer oder beider Strahlungsquellen 16a, 16b (bzw. optischer Bauteile der Strahlungsquellen 16a, 16b) erfolgen.

Durch das Erfassen der (hinreichend scharfen) Reflexionsspur 36 kann dann die Position und bei entsprechender Geometrie des Werkstücks 14 auch die Ausrichtung des Werkstücks 14 mittels Triangulation bestimmt werden. Position und/oder Ausrichtung des Werkstücks 14 relativ zur Bearbeitungseinheit 12 können dann verwendet werden, um die Bearbeitungseinheit 12 am Anfang oder während der Bearbeitung des Werkstücks 14 relativ zum Werkstück 14 zu positionieren/auszurichten bzw. die Relativposition und/oder Ausrichtung fortlaufend zu überwachen bzw. zu steuern.

Bspw. können Unebenheiten in der Oberfläche des Werkstücks 14 erkannt (und bearbeitet/kompensiert) werden oder die Relativbewegung zwischen dem Werkstück 14 und der Bearbeitungseinheit 12 so geregelt werden, dass (abschnittsweise) ein konstanter Abstand zwischen der Oberfläche und des Werkstücks 14 und der Bearbeitungseinheit 12 gewahrt wird, was bspw. die Programmierung der Bearbeitungseinheit 12 (bzw. einer die Bearbeitungseinheit 12 steuernde Steuereinheit) hinsichtlich zu bearbeitender Freiformflächen erleichtert, da es dann ausreicht, ebene Bahnen zu programmieren.

Ferner kann neben der an der Oberfläche des Werkstücks 14 reflektierten elektromagnetischen Strahlung auch eine vom Werkstück 14 abgestrahlte Wärmestrahlung erfasst werden. Die erfasste Wärmestrahlung kann bspw. ermöglichen, eine Ausdehnung des Werkstücks 14 zu bestimmen und eine entsprechende Anpassung der Positionierung/Ausrichtung der Bearbeitungseinheit 12 relativ zum Werkstück 14 vorzunehmen. Zudem kann die Wärmestrahlung genutzt werden, um die Erfassung der Reflexionsspur 36 zu verbessern, indem eine durch die auf das Werkstück 14 gelenkte elektromagnetische Strahlung verursachte lokale Erwärmung der Werkstückoberfläche genutzt wird, die Genauigkeit bei der Bestimmung des Verlaufs der Reflexionsspur 36 zu verbessern.

Fig. 3b zeigt eine weitere Ansicht der in Fig. 1b gezeigten Vorrichtung 10, auf die das zu Fig. 3a Ausgeführte analog zutrifft, wobei im Rahmen der Kalibrierungsroutine ein Ausrichten/Justieren der Strahlungsquelle 16 und/oder der Strahlteilereinheit 22 (bzw. optischer Bauteile der Strahlteilereinheit 22) erfolgt. Fig. 4 zeigt zudem eine Abwandlung der in Fig. 3a gezeigten Ausführungsform, die jedoch auch auf die in Fig. 3b gezeigte Ausführungsform übertragbar ist, wobei sich die in Fig. 4 gezeigte Abwandlung dadurch auszeichnet, dass die elektromagnetische Strahlung entlang ebener Flächen 32a, 32b abgestrahlt wird und/oder (anstatt auf gebogene) auf gerade Raumkurven 34a, 34b fokussiert sein kann. Ferner zeigt die in Fig. 4 gezeigte Abwandlung, dass die Strahlungsquellen 16a, 16b (wie auch in Fig. 6 und Fig. 8 illustriert) zum Arbeitsbereich 28 (bspw. einem zu bearbeitenden Werkstückabschnitt/-bereich bzw. einer Prozessstelle) hingeneigt sein können.

Wie in Fig. 5 gezeigt, kann der Sensoreinheit 18 eine Spiegelanordnung 38 vorgeschaltet sein, die ein Erfassen des Werkstücks 14 bzw. der Reflexionsspur 36 aus unterschiedlichen Perspektiven ermöglicht. Die Sensoreinheit 18 kann bspw. in mehrere Erfassungsbereiche unterteilt sein, wobei jeder Erfassungsbereich dazu dient, das Werkstück 14 bzw. die Reflexionsspur 36 aus einer Perspektive zu erfassen (bspw. eine Mittel- und zwei Seitenansichten). Alternativ können auch anstatt einer Sensoreinheit 18 mehrere Sensoreinheiten 18 vorgesehen sein, die das Werkstück 14 bzw. die Reflexionsspur 36 aus unterschiedlichen Perspektiven erfassen. Die Perspektiven können dabei Betrachtungsorten entsprechen, die parallel zur Reflexionsspur 36 voneinander beanstandet sind, um durch die Geometrie des Werkstücks 14 bedingte Verschattungen kompensieren zu können.

Um die Messeinheit 30 in Bearbeitungsrichtung (Vorschubrichtung) ausrichten zu können, kann, wie in Fig. 6 beispielhaft als Modifikation der in Fig. 1a gezeigten Vorrichtung illustriert, die Messeinheit 30 um eine Achse, welche bspw. durch die Bearbeitungseinheit 12 bzw. ein Werkzeug der Bearbeitungseinheit 12 verläuft) schwenkbar sein. Bspw. kann die Bearbeitungseinheit 12 in einem sich gegenüber der Werkstückauflage 20 erstreckenden Bereich (2- oder 3-dimensional) verfahrbar sein, wobei die Achse lotrecht zur Werkstückauflage oder lotrecht zu einer Oberfläche des Werkstücks 14 verläuft. Zudem können die Strahlungsquellen 16a, 16b (wie auch in Fig. 4 illustriert) zum Arbeitsbereich 28 (bspw. einem zu bearbeitenden Werkstückabschnitt/- bereich bzw. einer Prozessstelle) hingeneigt sein.

Ferner kann, wie in Fig. 7 gezeigt, die Vorrichtung 10 anstatt mit einer einzelnen Messeinheit 30 mit einer Vielzahl an Messeinheiten 30 versehen sein. Dabei können die Messeinheiten 30, wie in Fig. 7 gezeigt, die in Zusammenhang mit der in Fig. 1a gezeigten Ausgestaltung angeführten Bauteile (und die darauf bezogenen möglichen Modifikationen), aber auch die in Zusammenhang mit der in Fig. 1b gezeigten Ausgestaltung angeführten Bauteile (und die darauf bezogenen möglichen Modifikationen) aufweisen. Wie in Fig. 7 gezeigt, kann durch die Messeinheiten 30 ein die Bearbeitungseinheit 12 (in Umfangsrichtung) einhüllender Strahlenvorhang (aus sich schneidenden Strahlengängen) erzeugt werden, durch den sich schneidende

Reflexionsspuren 36 erzeugt werden.

Zudem können, wie in Fig. 8 gezeigt, die Messeinheiten 30, analog dem in Fig. 6 Gezeigten, um eine Achse (welche bspw. durch die Bearbeitungseinheit 12 bzw. ein Werkzeug der Bearbeitungseinheit 12 verläuft) schwenkbar sein. Zudem zeigt Fig. 8, dass die Strahlungsquellen 16a, 16b (wie auch in Fig. 4 und Fig. 6 illustriert) zum Arbeitsbereich 28 (bspw. einem zu bearbeitenden Werkstückabschnitt/-bereich bzw. einer Prozessstelle) hingeneigt sein können.

Eine oder mehrere Messeinheiten 30 können zudem in einem eigenen Gehäuse angeordnet sein (bspw. ein Gehäuse, welches für die Schutzklasse IP 61 ausgelegt ist) und als Modul in eine Bearbeitungsmaschine integrierbar sein. Das Gehäuse kann ferner eine Kühleinrichtung zum Kühlen des Gehäuseinnenraums bzw. der Messeinheit(en) 30 umfassen. Die Strom- und Datenversorgung kann des Weiteren über eine Ethernet-Verbindung erfolgen. Zusätzlich kann ein separater Stromversorgunganschluss vorgesehen sein. Für das Ausstrahlen der elektromagnetischen Strahlung und das Erfassen der reflektierten elektromagnetischen Strahlung kann das Gehäuse Öffnungen aufweisen. Die Öffnungen können mit austauschbaren Schutzgläsern versehen sein.

Fig. 9 zeigt ein Flussdiagramm eines Verfahrens zum Bestimmen einer Position und/oder Ausrichtung des Werkstücks 14. Das Verfahren beginnt mit einem Schritt 40 des Erzeugens eines Reflexionslinien-Paars auf dem Werkstück 16, wobei das Reflexionslinien-Paar zwei unmittelbar aneinander angrenzende oder sich zumindest teilweise überlappende Reflexionslinien umfasst. Nach dem Erfassen der Reflexionslinien in Schritt 42 wird in Schritt 44 die Position und/oder Ausrichtung des Werkstücks 14 mittels Triangulation auf Basis der Reflexionslinien bestimmt.

### BEZUGSZEICHENLISTE

- 10: Vorrichtung
- 12: Bearbeitungseinheit
- 14: Werkstück
- 16: Strahlungsquelle
- 18: Sensoreinheit
- 20: Werkstückauflage
- 22: Strahlteilereinheit
- 24: Ablenkeinrichtung
- 26: Strahlengang
- 28: Arbeitsbereich
- 30: Messeinheit
- 32: Fläche
- 34: Raumkurve
- 36: Reflexionsspur
- 38: Spiegelanordnung
- 40: Prozessschritt
- 42: Prozessschritt
- 44: Prozessschritt

## Patentansprüche

1. Vorrichtung (10) zum Bestimmen einer Position und/oder Ausrichtung eines Werkstücks (14) relativ zu einer Bearbeitungseinheit (12), umfassend:
eine in einer definierten Lagebeziehung zur Bearbeitungseinheit (12) oder in einer definierten Lagebeziehung zu einer Aufnahme, die zum Aufnehmen der Bearbeitungseinheit (12) vorgesehen ist, angeordnete erste Strahlungsquelle (16);
eine von der ersten Strahlungsquelle (16) in einer Raumrichtung beabstandet angeordnete zweite Strahlungsquelle (16) oder eine Strahlteilereinheit (22);
wobei die Strahlungsquellen (16) bzw. die Strahlteilereinheit (22) eingerichtet sind/ist, während des Betriebs der Vorrichtung (10) elektromagnetische Strahlung auf zwei unmittelbar aneinander angrenzende oder sich zumindest teilweise überlappende Raumkurven (34) zu fokussieren oder die elektromagnetische Strahlung entlang zweier unmittelbar aneinander angrenzender oder sich schneidender Flächen (32) abzustrahlen;
eine gemäß einer definierten Lagebeziehung zu den Strahlungsquellen (16) bzw. der Strahlteilereinheit (22) angeordnete Sensoreinheit, welche eingerichtet ist, während des Betriebs der Vorrichtung (10) von der ersten Strahlungsquelle (16) bzw. den Strahlungsquellen (16) abgestrahlte und an einer Oberfläche des Werkstücks (14) reflektierte elektromagnetische Strahlung und/oder von der Oberfläche des Werkstücks (14) abgestrahlte elektromagnetische Strahlung zu erfassen; und
eine Verarbeitungseinheit, welche eingerichtet ist, die Position und/oder Ausrichtung des Werkstücks (14) relativ zur Bearbeitungseinheit (12) auf Basis der erfassten elektromagnetischen Strahlung zu bestimmen;
**dadurch gekennzeichnet, dass**
die Verarbeitungseinheit eingerichtet ist, ein Fehlersignal auszugeben, wenn ein Abstand zwischen einer ersten Reflexionsspur (36) der elektromagnetischen Strahlung auf einer Oberfläche und einer zweiten Reflexionsspur (36) der elektromagnetischen Strahlung auf der Oberfläche außerhalb eines Toleranzbereiches liegt.

2. Vorrichtung (10) nach Anspruch 1, wobei die Raumkurven (34) in einer Ebene liegen bzw. die Flächen (32) eben sind.

3. Vorrichtung (10) nach Anspruch 1 oder 2, wobei die Raumkurven (34) gerade sind.

4. Vorrichtung (10) nach einem der Ansprüche 1 bis 3, wobei die Sensoreinheit (18) eine Spiegelanordnung (38) umfasst, die sich entlang der zwei unmittelbar aneinander angrenzenden oder sich zumindest teilweise überlappenden Raumkurven (34) bzw. entlang der zwei sich schneidenden Flächen (32) erstreckt und ein Erfassen der elektromagnetischen Strahlung aus unterschiedlichen Perspektiven erlaubt.

5. Vorrichtung (10) nach einem der Ansprüche 1 bis 4, wobei ein Sensor der Sensoreinheit (18) auf einer Mittelhalbierenden einer Verbindungslinie zwischen der ersten Strahlungsquelle (16) und der zweiten Strahlungsquelle (16) angeordnet ist und/oder die Sensoreinheit (18) die Scheimpflug-Bedingung erfüllt.

6. Vorrichtung (10) nach einem der Ansprüche 1 bis 5, wobei die Vorrichtung (10) eine Messeinheit (30), umfassend die erste Strahlungsquelle (16), die zweite Strahlungsquelle (16) bzw. die Strahlteilereinheit (22) und die Sensoreinheit (18) aufweist, wobei die Messeinheit (30) in der Vorrichtung (10) um eine Rotationsachse drehbar gelagert ist.

7. Vorrichtung (10) nach einem der Ansprüche 1 bis 6, wobei die erste Strahlungsquelle (16), die zweite Strahlungsquelle (16) bzw. die Strahlteilereinheit (22) und die Sensoreinheit (18) in einer Messeinheit (30) umfasst sind und die Vorrichtung (10) eine Vielzahl solcher Messeinheiten (30) aufweist.

8. Vorrichtung (10) nach Anspruch 7, wobei sich Strahlengänge 26 der Messeinheiten (30) schneiden.

9. Verfahren zum Bestimmen einer Position und/oder Ausrichtung eines Werkstücks (14), umfassend:
Erzeugen (40) eines oder mehrerer Reflexionslinien-Paare, wobei jedes Reflexionslinien-Paar zwei unmittelbar aneinander angrenzende oder sich zumindest teilweise überlappende, und/oder parallele Reflexionslinien, vorzugsweise Lichtlinien, umfasst, die durch aus unterschiedlichen Richtungen auf die Oberfläche abgestrahlte elektromagnetische Strahlung erzeugt werden;
Erfassen (42) der Reflexionslinien; und
Bestimmen (44) der Position und/oder Ausrichtung des Werkstücks (14) mittels Triangulation auf Basis der Reflexionslinien;
**dadurch gekennzeichnet, dass** das Verfahren ferner
ein Bestimmen eines Abstands der Reflexionslinien eines Reflexionslinien-Paares und Ausgeben eines Fehlersignals, wenn der Abstand außerhalb eines Toleranzbereiches liegt, umfasst.

10. Verfahren nach Anspruch 9, wobei sich Reflexionslinien unterschiedlicher Reflexionslinien-Paare auf der Oberfläche des Werkstücks (14) schneiden und/oder gleich große Winkel einschließen.

## Claims

1. A device (10) for determining a position and/or orientation of a workpiece (14) relative to a machining unit (12), comprising:
a first radiation source (16) arranged in a defined positional relationship to the machining unit (12) or in a defined positional relationship to a support, which is provided to accommodate the machining unit (12);
a second radiation source (16) or a beam splitter unit (22) arranged at a distance from the first radiation source (16) in a spatial direction;
wherein the radiation sources (16) and/or the beam splitter unit (22) is/are designed, during operation of the device (10), to focus electromagnetic radiation onto two immediately adjacent or at least partially overlapping spatial curves (34) or to emit electromagnetic radiation along two immediately adjacent or intersecting surfaces (32);
a sensor unit arranged in accordance with a defined positional relationship to the radiation sources (16) and/or the beam splitter unit (22), which is designed, during operation of the device (10), to detect electromagnetic radiation emitted by the first radiation source (16) and/or the radiation sources (16) and reflected on a surface of the workpiece (14) and/or electromagnetic radiation emitted by the surface of the workpiece (14); and
a processing unit, which is designed to determine the position and/or orientation of the workpiece (14) relative to the machining unit (12) on the basis of the electromagnetic radiation detected;
**characterised in that**
the processing unit is designed to issue an error signal when a distance between a first reflection path (36) of the electromagnetic radiation on a surface and a second reflection path (36) of the electromagnetic radiation on the surface lies outside a tolerance range.

2. The device (10) according to claim 1, wherein the spatial curves (34) lie in a plane and/or the surfaces (32) are level.

3. The device (10) according to claim 1 or 2, wherein the spatial curves (34) are straight.

4. The device (10) according to any of claims 1 to 3, wherein the sensor unit (18) comprises a mirror arrangement (38), which extends along the two immediately adjacent or at least partially overlapping spatial curves (34) and/or along the two intersecting surfaces (32) and allows the electromagnetic radiation to be detected from different perspectives.

5. The device (10) according to any of claims 1 to 4, wherein a sensor of the sensor unit (18) is arranged on a bisecting line of a connecting line between the first radiation source (16) and the second radiation source (16) and/or the sensor unit (18) fulfils the Scheimpflug condition.

6. The device (10) according to any of claims 1 to 5, wherein the device (10) has a measuring unit (30), comprising the first radiation source (16), the second radiation source (16) and/or the beam splitter unit (22) and the sensor unit (18), wherein the measuring unit (30) is rotatably mounted in the device (10) about an axis of rotation.

7. The device (10) according to any of claims 1 to 6, wherein the first radiation source (16), the second radiation source (16) and/or the beam splitter unit (22) and the sensor unit (18) are included in a measuring unit (30) and the device (10) has a plurality of such measuring units (30).

8. The device (10) according to claim 7, wherein beam paths 26 of the measuring units (30) intersect.

9. A method for determining a position and/or orientation of a workpiece (14), comprising:
generating (40) one or more pairs of reflection lines, wherein each pair of reflection lines comprises two immediately adjacent or at least partially overlapping and/or parallel reflection lines, preferably light lines, which are generated by electromagnetic radiation emitted from different directions onto the surface;
detecting (42) the reflection lines; and
determining (44) the position and/or orientation of the workpiece (14) by means of triangulation on the basis of the reflection line;
**characterised in that** the method further comprises
determining a distance of the reflection lines of a pair of reflection lines and issuing an error signal, when the distance lies outside a tolerance range.

10. The method according to claim 9, wherein reflection lines of different pairs of reflection lines intersect on the surface of the workpiece (14) and/or involve equally large angles.

## Revendications

1. Dispositif (10) pour déterminer une position et/ou une orientation d'une pièce (14) par rapport à une unité d'usinage (12), comprenant :
une première source de rayonnement (16) disposée dans une relation de position définie par rapport à l'unité d'usinage (12) ou dans une relation de position définie par rapport à un logement qui est prévu pour recevoir l'unité d'usinage (12) ;
une seconde source de rayonnement (16) ou une unité de séparateur de faisceau (22) disposée à distance de la première source de rayonnement (16) dans une direction spatiale ;
dans lequel les sources de rayonnement (16) ou l'unité de séparateur de faisceau (22) sont configurées pour focaliser le rayonnement électromagnétique sur deux courbes spatiales (34) directement adjacentes ou se chevauchant au moins partiellement ou pour rayonner le rayonnement électromagnétique le long de deux surfaces (32) directement adjacentes ou se coupant pendant le fonctionnement du dispositif (10) ;
une unité de capteur disposée selon une relation de position définie par rapport aux sources de rayonnement (16) ou l'unité de séparation de faisceau (22), laquelle est configurée pour détecter le rayonnement électromagnétique rayonné par la première source de rayonnement (16) ou les sources de rayonnement (16) et réfléchi sur une surface de la pièce (14) et/ou le rayonnement électromagnétique rayonné par la surface de la pièce (14) pendant le fonctionnement du dispositif (10) ; et
une unité de traitement, laquelle est configurée pour déterminer la position et/ou l'orientation de la pièce (14) par rapport à l'unité d'usinage (12) sur la base du rayonnement électromagnétique détecté ;
**caractérisé en ce que**
l'unité de traitement est configurée pour émettre un signal d'erreur si une distance entre une première piste de réflexion (36) du rayonnement électromagnétique sur une surface et une seconde piste de réflexion (36) du rayonnement électromagnétique sur la surface se situe hors d'une plage de tolérance.

2. Dispositif (10) selon la revendication 1, dans lequel les courbes spatiales (34) se situent dans un plan ou les surfaces (32) sont planes.

3. Dispositif (10) selon la revendication 1 ou 2, dans lequel les courbes spatiales (34) sont droites.

4. Dispositif (10) selon l'une quelconque des revendications 1 à 3, dans lequel l'unité de détection (18) comprend un agencement de miroir (38) qui s'étend le long des deux courbes spatiales (34) directement adjacentes ou se chevauchant au moins partiellement ou le long des deux surfaces (32) se coupant et permet une détection du rayonnement électromagnétique depuis différentes perspectives.

5. Dispositif (10) selon l'une quelconque des revendications 1 à 4, dans lequel un capteur de l'unité de détection (18) est disposé sur une bissectrice d'une ligne de connexion entre la première source de rayonnement (16) et la seconde source de rayonnement (16) et/ou l'unité de détection (18) remplit la condition de Scheimpflug.

6. Dispositif (10) selon l'une quelconque des revendications 1 à 5, dans lequel le dispositif (10) présente une unité de mesure (30) comprenant la première source de rayonnement (16), la seconde source de rayonnement (16) ou l'unité de séparateur de faisceau (22) et l'unité de capteur (18), dans lequel l'unité de mesure (30) est montée de manière rotative dans le dispositif (10) autour d'un axe de rotation.

7. Dispositif (10) selon l'une quelconque des revendications 1 à 6, dans lequel la première source de rayonnement (16), la seconde source de rayonnement (16) ou l'unité de séparateur de faisceau (22) et l'unité de détection (18) sont comprises dans une unité de mesure (30) et le dispositif (10) présente une pluralité de telles unités de mesure (30).

8. Dispositif (10) selon la revendication 7, dans lequel les trajets de faisceau 26 des unités de mesure (30) se coupent.

9. Procédé pour déterminer une position et/ou une orientation d'une pièce (14), comprenant :
la génération (40) d'une ou de plusieurs paires de lignes de réflexion, dans lequel chaque paire de lignes de réflexion comprend deux lignes de réflexion directement adjacentes ou se chevauchant au moins partiellement, et/ou parallèles, de préférence des lignes lumineuses, qui sont générées par un rayonnement électromagnétique rayonné sur la surface depuis différentes directions ;
la détection (42) des lignes de réflexion ; et
la détermination (44) de la position et/ou de l'orientation de la pièce (14) par triangulation sur la base des lignes de réflexion ;
**caractérisé en ce que** le procédé comprend en outre
une détermination d'une distance entre les lignes de réflexion d'une paire de lignes de réflexion et l'émission d'un signal d'erreur si la distance se situe hors d'une plage de tolérance.

10. Procédé selon la revendication 9, dans lequel des lignes de réflexion de différentes paires de lignes de réflexion se coupent à la surface de la pièce (14) et/ou renferment des angles de même taille.
